# EUROPEAN PATENT APPLICATION

(11) **EP 4 132 101 A1**
(43) Date of publication of application: **08.02.2023**
(21) Application number: 21818443.0
(22) Date of filing: 22.04.2021
(51) Int. Cl.: H04W 36/00

(54) **CONNECTION MODE CONFIGURATION METHOD, BASE STATION, AND COMMUNICATION SYSTEM**

(30) Priority: 01.06.2020 CN 202010483765
(71) Applicant: China Telecom Corporation Limited, Beijing 100033 (CN)
(72) Inventor: XU, Sen, Beijing 100033 (CN); SUN, Zhenqiang, Beijing 100033 (CN); ZHANG, Le, Beijing 100033 (CN)
(74) Representative: Sadler, Peter Frederick
(86) International application number: PCT/CN2021/088835
(87) International publication number: WO 2021/244177

(57) **Abstract**

Provided are a connection mode configuration method, a base station, and a communication system. The connection mode configuration method comprises: after measurement information reported by a user terminal is received, a CU-CP of a first base station determining, according to the terminal capability of the user terminal and a connection mode supported by a CU-UP of the first base station, a connection mode used by the user terminal which has been handed over to a second base station, and sending a handover request to the second base station; after a secondary base station addition request sent by the second base station is received, the CU-CP indicating, according to bearer configuration information comprised in the secondary base station addition request, that the CU-UP performs bearer configuration update; the CU-CP generating first access configuration information according to a bearer configuration update result of the CU-UP, and sending the first access configuration information to the second base station; and after a handover request response sent by the second base station is received, the CU-CP indicating, according to bearer configuration information comprised in the handover request response, that the CU-UP performs bearer configuration update.

## Description

### CROSS-REFERENCE TO RELATED APPLICATIONS

This application is based on and claims priority from CN application No. 202010483765.0, filed on June 1, 2020, the disclosure of hereby incorporated into this disclosure by reference in its entirety.

### TECHNICAL FIELD

The present disclosure relates to the field of wireless communications, and in particular, to a connection mode configuration method, a base station, and a communication system.

### BACKGROUND

The 5G is used as a main technology of a next generation wireless network and has the technical features of supporting ultra-wide band, large connection and the like. At present, in a wireless network architecture, a base station side adopts an architecture based on a CU (Centralized Unit) and a DU (Distributed Unit) . An interface F1 is used between the CU and the DU to transmit information of a control plane and a user plane, wherein the CU is mainly in charge of protocol functions of a PDCP (Packet Data Convergence Protocol), SDAP (Service Data Adaptation Protocol) and an RRC (Radio Resource Control), and the DU is mainly in charge of functions of a physical layer, an MAC (Media Access Control) layer, an RLC (Radio Link Control) layer, and a part of RRC layer ASN.1 (Abstract Syntax Notation One) coding and decoding functions. According to the current protocol, all the physical layer parameters of the base station are generated and configured by the DU and notified to the CU, and the parameters of the high layers of a cell and the parameter configuration such as radio resource management are generated by the CU.

To further support a virtualization function of the base station side, the base station side in the current architecture includes a CP (Control Plane) entity and a plurality of UP (User Plane) entities. The UP and the CP communicates via an E1 interface. When the interface E1 is built between the UP and the CP, the UP needs to notify relevant information to the CP to perform relevant configuration, which includes a list of PLMNs (Public Land Mobile networks) that the UP entity can support and core Network types to which the UP entity can connect, such as connecting to a 4G core network, a 5G core network, or connecting to both the 4G core network and the 5G core network. The CP configures a network connection mode for the user equipment having the corresponding equipment capability based on the capability.

When the configuration of the UP is changed, the UP sends new UP configuration information through E1 signaling to the CP. In this procedure, when the configuration of the UP is changed, only information about user plane capacity, or supported PLMN, etc. is notified to the CP, but in the related art, information about a configuration of a core network to which the UP is connected is not notified to the CP.

In addition, when the bearer configuration changes, the CP needs to notify the UP to adjust bearer-related configuration parameters, which indicates updating of configuration information of a DRB (Data Resource Bearer) based on an E-UTRAN (Evolved Universal Radio Access Network) or a PDU (Protocol Data Unit) based on a NR (New Radio) session.

Considering the configuration change of the mode in the NR base station, it is necessary to support the evolution from the NSA (Non-Stand Alone) single mode to the NSA/SA (Stand Alone) dual mode.

In the current protocol, switching between SA and NSA is supported, and a special scenario is that the NR side keeps the original node unchanged before and after switching. In the handover request process, the source-side base station gNB needs to notify a target-side LTE (Long Term Evolution) base station of a UE NGAP (Next Generation Application Protocol) IE (Information Element) of the UE in the base station, and based on this information, after receiving a secondary base station addition request (SgNB Addition Request) message through an X2 interface, the source-side base station determines whether the request is an establishment request sent by the same user equipment according to this information, and keeps the context of the user equipment unchanged based on the determining result.

### SUMMARY

According to a first aspect of the embodiments of the present disclosure, a configuration method for a connection mode by a first base station is provided, comprising: determining, by a control plane entity in the centralized unit CU-CP of the first base station, a connection mode adopted by a user equipment UE after being switched to a second base station according to a UE capability of the UE and a connection mode supported by a user plane entity in the centralized unit CU-UP of the first base station after receiving measurement information reported by the UE, and sending a handover request to the second base station; configuring, by the CU-CP, a bearer of the CU-UP according to first bearer configuration information comprised in a secondary base station adding request sent by the second base station, generating second bearer configuration information according to a configuration result and indicating the CU-UP to update the bearer configuration according to the second bearer configuration information; generating, by the CU-CP, first access configuration information according to an updating result of the bearer configuration of the CU-UP and sending the first access configuration information to the second base station; generating, by the CU-CP, fourth bearer configuration information for configuring the bearer of the CU-UP according to third bearer configuration information comprised in the handover request response sent by the second base station, and indicating the CU-UP to update the bearer configuration according to the fourth bearer configuration information.

In some embodiments, the determining, by the CU-CP, a connection mode adopted by the UE after being switched to a second base station comprises: determining, by the CU-CP, that the UE establishes a single connection with the second base station after being switched under a condition that the UE supports only single connectivity; determining, by the CU-CP, that the UE establishes a single connection with the second base station after being switched under a condition that the UE supports a dual connectivity and the core network connection capability of the CU-UP corresponding to the public land mobile network selected by the UE supports a 5G core network; determining, by the CU-CP, that the UE establishes a single connection with the second base station or a double connection with the first base station and the second base station after being switched according to a signal intensity under a condition that the UE supports the double connectivity and the core network connection capability of the CU-UP corresponding to the public land mobile network selected by the UE supports an evolved packet core network and a 5G core network.

In some embodiments, the handover request includes address information of the second base station and handover assistance information, wherein the handover assistance information comprises a next generation application protocol identifier allocated to the UE by a first core network corresponding to the first base station.

In some embodiments, the handover request further comprises a measurement result associated with a radio access technology used by the second base station under a condition that the UE can only establish establishes a single connection with the second base station after being switched; the handover request further comprises a measurement result associated with a radio access technology used by the first base station and a measurement result associated with the radio access technology used by the second base station under a condition that the UE establishes a dual connection with the first base station and the second base station after being switched; the handover request comprises no measurement result under a condition that a cause of the handover is an evolved packet system fallback.

In some embodiments, the measurement result comprises an identifier of the measurement cell, and at least one of a signal intensity and a signal quality associated with the identifier of the measurement cell, the signal intensity comprises at least one of a reference signal received power of a long term evolution cell or a reference signal received power of a synchronization signal of a new radio cell, the signal quality comprises at least one of a reference signal reception quality of the long term evolution cell or a reference signal reception quality of the synchronization signal of the new radio cell.

In some embodiments, the sending a handover request to the second base station comprises: sending, by the CU-CP, the handover request to the second base station through a first core network corresponding to the first base station and a second core network corresponding to the second base station.

In some embodiments, the configuring, by the CU-CP, a bearer of the CU-UP according to first bearer configuration information comprises: determining, by the CU-CP, whether an evolved radio access bearer matched with a protocol data unit session is comprised in bearers of the first base station under a condition of determining the UE configures a context in the first base station and is executing a handover operation according to the identifier of the next generation application protocol, wherein a service quality information of the protocol data unit session is the same as a service quality information of the matched evolved radio access bearer; determining, by the CU-CP, that a protocol data unit session needs to be kept in the CU-UP after the UE being switched and establishing a mapping relation between the CU-CP and the matched evolved radio access bearer under a condition that there exists a evolved radio access bearer matched with the protocol data unit session; determining, by the CU-CP, that the protocol data unit session needs to be deleted after the UE being switched under a condition that the protocol data unit session does not have a matched evolved radio access bearer; adding, by the CU-CP, a matched protocol data unit session for the evolved radio access bearer under a condition that the evolved radio access bearer does not have the matched protocol data unit session.

In some embodiments, the indicating, by the CU-CP, the CU-UP to update the bearer configuration according to the second bearer configuration information comprises: sending, by the CU-CP, a first bearer context modification request to the CU-UP; updating, by the CU-UP, a bearer configuration according to second bearer configuration information comprised in the first bearer context modification request, and stopping sending data to the UE, wherein the second bearer configuration information comprises protocol data unit session information that needs to be deleted, protocol data unit session information that needs to be modified, and an evolved radio access bearer that needs to be added, wherein the protocol data unit session information that needs to be deleted comprises a protocol data unit session identifier and a suspension operation indication, the protocol data unit session information that needs to be modified comprises a protocol data unit session identifier, an evolved radio access bearer that has a mapping relationship with the protocol data unit session and a corresponding bearer type, and the evolved radio access bearer information that needs to be added comprises an evolved radio access bearer identifier that needs to be added and corresponding quality of service information.

In some embodiments, sending, by the CU-UP, a first bearer context modification response after updating corresponding bearer, wherein the first bearer context modification response comprises at least one of a successfully added bearer list, a successfully deleted bearer list, a successfully modified bearer list and a bearer list which cannot be successfully accepted.

In some embodiments, the sending, by the CU-CP, the first access configuration information to the second base station comprises: encapsulating, by the CU-CP, the first access configuration information in a radio resource control container and sending the first access configuration information to the second base station through an interface between the CU-CP and the second base station, wherein the first access configuration information comprises at least one of a successfully added bearer list, a successfully deleted bearer list, and a bearer list which cannot be successfully accepted.

In some embodiments, the indicating the CU-UP to update the bearer configuration according to the fourth bearer configuration information comprises: sending, by the CU-CP, a second bearer context modification request to the CU-UP, wherein the second bearer context modification request comprises the fourth bearer configuration information; configuring, by the CU-UP, the bearers to be added for uplink service and downlink service transmission, and deleting the identifiers of the bearers to be deleted and all cache data according to the fourth bearer configuration information.

In some embodiments, sending, by the CU-CP, access indication information to the CU-UP after receiving an access request sent by the UE; processing, by the CU-UP, uplink data and downlink data of the UE using the configured bearer after receiving the access indication information, wherein the access indication information comprises a control plane user identifier assigned by the CU-CP, a user plane user identifier assigned by the CU-UP and an access completion indication.

In some embodiments, determining, by the CU-UP, a connection capability of the core network of the CU-UP according to a trigger information and sending connection capability information of the core network of the CU-UP to the CU-CP; determining, by the CU-CP, a connection mode of the UE according to the core network connection capacity information of the CU-UP.

In some embodiments, the connection capability information of the core network comprises a public core network support capability of the CU-UP, and a public land mobile network list supported by the CU-UP, wherein the public land mobile network list comprises public land mobile network identifies and the core network support capability of each public land mobile network.

In some embodiments, sending, by the CU-UP, a updated core network connection capacity information to the CU-CP under a condition that the core network connection capacity of one or more public land mobile networks is changed, thereby the CU-CP determining the connection mode of the UE according to the updated core network connection capacity information.

In some embodiments, the UE selecting the CU-UP can only be configured with a non-stand-alone mode under a condition that the CU-UP supports an evolved packet core network; the UE selecting the CU-UP can only be configured with a stand-alone mode under a condition that the CU-UP supports a 5G core network; the UE selecting the CU-UP is configured with at least one of the non-stand-alone mode and the stand-alone mode according to needs under a condition that the CU-UP supports an evolved packet core network and a 5G core network.

According to a second aspect of the embodiments of the present disclosure, a base station is provided, comprising: a processor; and a memory coupled to the processor, storing program instructions which, when executed by the processor, cause the processor to implement the method according to any one of the embodiments described above.

According to a third aspect of the embodiments of the present disclosure, a configuration method for a connection mode by a second base station is provided, comprising: determining whether the first base station is used as a secondary base station of a user equipment UE after receiving a handover request sent by a control plane entity in a centralized unit CU-CP of a first base station; sending a secondary base station adding request to the CU-CP under a condition that the first base station is used as the secondary base station, wherein the secondary base station adding request comprises first bearer configuration information associated with a service needing to be carried by the first base station; generating second access configuration information that the UE uses to access the second base station according to the first access configuration information sent by the CU-CP, and sending a handover request response to the CU-CP, wherein the handover request response comprises third bearer configuration information used for describing bearer configurations of the first base station and the second base station.

In some embodiments, the determining whether the first base station is used as a secondary base station of the UE comprises: determining not to use the first base station as the secondary base station of the UE under a condition that a UE capability of the UE does not support the addition of secondary connection in a handover process; determining to use the first base station as the secondary base station of the UE under a condition that the UE capability of the UE supports the addition of secondary connection in a handover process, and the cause of the handover is an evolved packet system fallback and there exists no measurement result; determining to use the first base station as the secondary base station of the UE under a condition that the UE capability of the UE supports the addition of secondary connection in the handover process and a signal intensity of a cell to which the first base station belongs is the highest in the measurement result.

In some embodiments, the first bearer configuration information comprises a list of services carried by the first base station and a next generation application protocol identifier allocated by the first core network to the UE, wherein the list of services carried by the first base station comprises an identifier of each evolved radio access bearer and corresponding quality-of-service configuration information.

In some embodiments, placing the first access configuration information into a first radio resource control container, thereby instructing the UE to access the first base station in the handover process after generating the second access configuration information; placing the second access configuration information into a second radio resource control container, thereby instructing the UE to access the second base station in the handover process.

In some embodiments, the third bearer configuration information comprises a list of bearers accepted by the first base station, a list of bearers accepted by the second base station, a list of bearers that cannot be accepted by the first base station, and a list of bearers that cannot be accepted by the second base station.

In some embodiments, the sending a handover request response to the CU-CP comprises: sending the handover request response to the first base station through a second core network corresponding to the second base station and a first core network corresponding to the first base station.

According to a fourth aspect of embodiments of the present disclosure, a base station is provided, comprising: a processor; and a memory coupled to the processor, storing program instructions which, when executed by the processor, cause the processor to implement the method according to any one of the embodiments described above.

According to a fifth aspect of embodiments of the present disclosure, a communication system is provided, comprising: a first base station mentioned above; a second base station mentioned above.

In some embodiments, further comprising a first core network corresponding to the first base station and a second core network corresponding to the second base station; the first core network, configured to map the protocol data unit session comprised in the handover request sent by the first base station into evolved radio access bearer information, record the mapping relation between the protocol data unit session identifier and the evolved radio access bearer identifier, write the evolved radio access bearer information into the handover request to update the handover request, and send the updated handover request to a second core network; the second core network, configured to send the updated switching request to the second base station.

In some embodiments, the second core network is configured to send a handover request response sent by the second base station to the first core network; the first core network is configured to convert the evolved radio access bearer identifier comprised in the third bearer configuration information in the handover request response into a protocol data unit session identifier according to a mapping relation between the protocol data unit session identifier and the evolved radio access bearer identifier to generate an updated handover request response, and send the updated switching request response to the first base station.

According to a sixth aspect of the embodiments of the present disclosure, there is provided a non-transitory computer-readable storage medium, which stores computer instructions that, when executed by a processor, implement the method according to any one of the embodiments described above.

Other features of the present disclosure and advantages thereof will be described more clearly from the following detailed description of exemplary embodiments thereof, which proceeds with reference to the accompanying drawings.

### BRIEF DESCRIPTION OF THE DRAWINGS

The accompanying drawings, which are incorporated in and constitute a part of this specification, illustrate embodiments of the disclosure and together with the description, serve to explain the principles of the disclosure.

The present disclosure may be more clearly understood from the following detailed description taken in conjunction with the accompanying drawings, in which:
FIG. 1 is a schematic flowchart of a connection mode configuration method according to one embodiment of the present disclosure;
FIG. 2 is a schematic flowchart of a connection mode configuration method according to another embodiment of the present disclosure;
FIG. 3 is a schematic structural diagram of a base station according to one embodiment of the present disclosure;
FIG. 4 is a schematic flowchart of a connection mode configuration method according to still another embodiment of the present disclosure;
FIG. 5 is a schematic structural diagram of a base station according to another embodiment of the present disclosure;
FIG. 6 is a schematic structural diagram of a communication system according to one embodiment of the present disclosure;
FIG. 7 is a schematic structural diagram of a communication system according to still another embodiment of the present disclosure;
FIG. 8 is a schematic flowchart of a connection mode configuration method according to still another embodiment of the present disclosure;
FIG. 9 is a schematic flowchart of a connection mode configuration method according to still another embodiment of the present disclosure.

It should be understood that the dimensions of the various parts shown in the drawings are not drawn to scale. Further, the same or similar reference numerals denote the same or similar components.

### DETAILED DESCRIPTION

Various exemplary embodiments of the present disclosure will now be described in detail with reference to the accompanying drawings. The description of the exemplary embodiments is merely illustrative and is in no way intended to limit the disclosure, its application, or uses. The present disclosure may be embodied in many different forms and is not limited to the embodiments described herein. These embodiments are provided so that the present disclosure will be thorough and complete, and will fully convey the scope of the disclosure to those skilled in the art. It should be noted that: the relative arrangement of parts and steps, the composition of materials and values set forth in these embodiments are to be construed as illustrative only and not as limiting unless otherwise specifically stated.

The use of "including" or "comprising" and the like in this disclosure is intended to mean that the elements preceding the word encompass the elements listed after the word and does not exclude the possibility that other elements may also be encompassed.

All terms (including technical or scientific terms) used herein have the same meaning as commonly understood by one of ordinary skill in the art to which this disclosure belongs unless specifically defined otherwise. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Techniques, methods, and apparatus known to one of ordinary skill in the relevant art may not be discussed in detail but are intended to be part of the specification where appropriate.

The inventors has noticed that, based on the evolution direction of the currently support NSA deployment towards the SA or dual mode direction, when the user equipment is in the SA and NSA switching mode, and the NR base station adopts the CP and UP separation architecture, the following problems still exist in the prior art:
- The CP has no knowledge of mode update situation of the UP: when the connection capability of core network supported by the UP changes or the connection conditions of different PLMN configurations are different, the UP in the related art cannot indicate the update information of the connection capability of its core network and the connection capability configured for each PLMN to the CP, and in such a case, the CP lacks knowledge about the connection capability of the UP, which causes a wrong network connection to be configured for a user equipment with a different capability or a user equipment supporting a different PLMN, thereby causing a call drop or a handover failure of the user equipment.
- The inability to maintain data transfer continuity during mode transition: at present, when a bearer is converted from the SA state to the NSA state, the NR UP side needs to adopt two user equipment context modification (UE Context Modification) procedures to perform the procedure, wherein the first procedure needs to delete the previous PDU session bearer, and the second procedure is to re-establish an E-UTRAN based DRB bearer. As a result, the previous received data and the buffer information may be cleared due to the mode conversion, thereby causing a long user transmission recovery time.
- The inability to establish relationship between E-RAB (Evolved Radio Access Bearer) and PDU session: because two bearer context modification procedures need to be adopted, the UP cannot know the mapping relationship between the PDU session which needs to be reserved and the subsequently established E-RAB Bearer, such that the UP cannot recover the bearer which is suspended for transmission, and can only re-perform data transmission based on the newly established E-RAB bearer, thereby resulting in long user transmission recovery time.
- False deletion of bearer configuration: at present, when the NR base station continues to be used as a secondary node of the NSA after the handover, if the CP receives a handover completion message sent by a neighboring base station in the handover process, a UE context release message is generally used to delete all bearer configuration information in the cell, but when the UP still needs to be used as an secondary connection of the user equipment, the above scheme will cause data interruption of the user equipment.

Accordingly, the current protocols of 3GPP (3rd Generation Partnership Project) LTE and NR cannot meet the requirements, and need to be enhanced by new ways to meet the requirements of network deployment and optimization.

To this end, the present disclosure provides a connection mode configuration scheme to solve at least one of the problems described above.

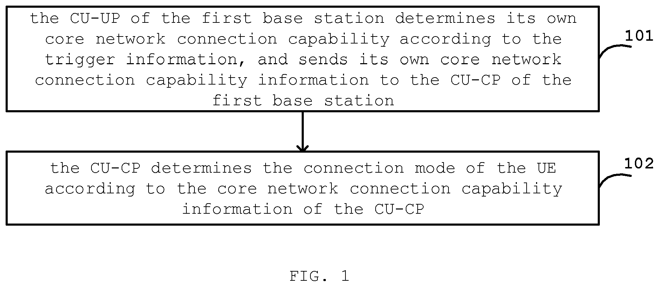

FIG. 1 is a schematic flowchart of a connection mode configuration method according to one embodiment of the present disclosure. In some embodiments, the following connection mode configuration method is performed by the first base station.

In step 101, a user plane entity of a centralized unit CU-UP of the first base station determines its own core network connection capability according to the trigger information, and sends its own core network connection capability information to the control plane entity of the centralized unit CU-CP of the first base station.

In some embodiments, the trigger information may be network management configuration information.

In some embodiments, the CU-UP may send its own core network connection capability information to the CU-CP via a GNB-CU-UP E1 SETUP REQUEST message or a GNB-CU-CP E1 SETUP RESPONSE message.

In some embodiments, the core network connection capability information comprises:
- common core network support capability of the CU-UP: taking an enumeration manner to represent the software support capability of the user plane of the core network to which the CU-UP can be connected, comprising the three options of EPC (Evolved Packet Core), 5GC (5G Core network) and Both (EPC and 5GC)
- a list of PLMNs supported by the CU-UP:
   ✔ PLMN ID: PLMN information as defined in TS38.463,
   ✔ core network support capability of each PLMN: when the information is not configured, it indicates that the PLMN supports the same core network capability as the public core network support capability, and if configured, it indicates that the PLMN is to apply the capability defined by this information.

In step 102, the CU-CP determines the connection mode of the user equipment according to the core network connection capability information of the CU-CP itself.

For example, under a condition that CU-UP supports EPC, the user equipment selecting the CU-UP can only be configured with a NSA mode; under a condition that the CU-UP supports the 5G core network, the user equipment selecting the CU-UP can only be configured with a SA mode; under a condition that the CU-UP supports EPC and 5G core networks, the user equipment selecting CU-UP is configured with at least one of NSA mode or SA mode as needed.

In some embodiments, the CU-UP sends the updated core network connection capability information to the CU-CP under a condition that the core network connection capability of one or more PLMNs changes, such that the CU-CP determines a connection mode of the user equipment according to the updated core network connection capability information.

For example, the CU-UP sends the updated core network connection capability information to the CU-CP through a GNB-CU-UP CONFIGURATION UPDATE message or a GNB-CU-CP CONFIGURATION UPDATE ACKNOWLEDGE message.

Therefore, the CU-CP can determine a corresponding network access mode for the user equipment according to the core network connection capability of the CU-UP.

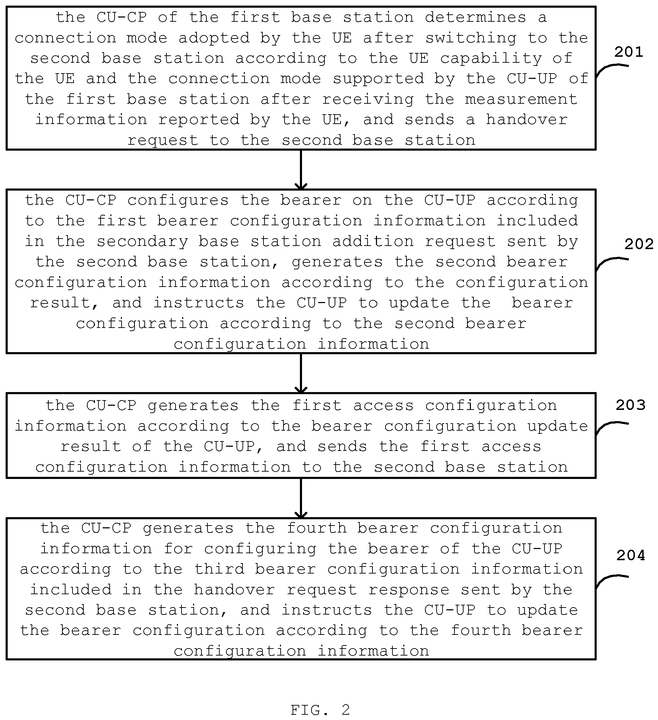

FIG. 2 is a schematic flowchart of a connection mode configuration method according to another embodiment of the disclosure. In some embodiments, the following connection mode configuration method is performed by the first base station.

In step 201, the CU-CP of the first base station determines a connection mode adopted by the user equipment (UE) after being switched to the second base station according to the UE capability of the UE after receiving the measurement information reported by the UE, and sends a handover request to the second base station, such that the second base station determines whether to use the first base station as a secondary base station of the UE.

In some embodiments, the CU-CP of the first base station determines a connection mode adopted by the UE after being switched to the second base station comprises: the CU-CP determines that the UE establishes a single connection with the second base station after being switched under a condition that the UE supports only single connectivity; the CU-CP determines that the UE establishes a single connection with the second base station after being switched under a condition that the UE supports a dual connectivity and the core network connection capability of the CU-UP corresponding to the PLMN selected by the UE supports a 5G core network; the CU-CP determines that the UE establishes a single connection with the second base station or a double connection with the first base station and the second base station after being switched according to a signal intensity under a condition that the UE supports the double connectivity and the core network connection capability of the CU-UP corresponding to the PLMN selected by the UE supports an evolved packet core network and a 5G core network.

In some embodiments, the handover request includes address information of the second base station and handover assistance information, wherein the handover assistance information includes an NGAP identifier allocated to the UE by the first core network corresponding to the first base station.

In some embodiments, the handover request further comprises a measurement result associated with a RAT (Radio Access Technology) used by the second base station under a condition that the UE can only establish establishes a single connection with the second base station after being switched. The handover request further comprises a measurement result associated with a RAT used by the first base station and a measurement result associated with the RAT used by the second base station under a condition that the UE establishes a dual connection with the first base station and the second base station after being switched. The handover request does not comprises the measurement result under a condition that a cause of the handover is an evolved packet system fallback(EPS Fallback).

In some embodiments, the measurement result comprises an identifier of the measurement cell, and at least one of a signal intensity and a signal quality associated with the identifier of the measurement cell, the signal intensity comprises at least one of a reference signal received power RSRP of a LTE cell or a reference signal received power of a synchronization signal SS-RSRP of a new radio cell, the signal quality comprises at least one of a reference signal reception quality RSRQ of the LTE cell or a reference signal reception quality of the synchronization signal SS-RSRQ of the new radio cell.

In some embodiments, the CU-CP sends the handover request to the second base station through a first core network corresponding to the first base station and a second core network corresponding to the second base station.

In step 202, the CU-CP configures a bearer of the CU-UP according to first bearer configuration information comprised in a secondary base station adding request sent by the second base station, generates second bearer configuration information according to a configuration result and indicates the CU-UP to update the bearer configuration according to the second bearer configuration information.

In some embodiments, the CU-CP configures a bearer of the CU-UP according to first bearer configuration information comprises: the CU-CP determines whether an E-RAB matched with a PDU session is comprised in bearers of the first base station under a condition of determining the UE configures a context in the first base station and is executing a handover operation according to the NGAP identifier, wherein a QoS information of the PDU session is the same as a QoS information of the matched E-RAB; the CU-CP determines that a PDU session needs to be kept in the CU-UP after the UE being switched and establishing a mapping relation between the CU-CP and the matched E-RAB under a condition that there exists a E-RAB matched with the PDU session; the CU-CP determines that the PDU session needs to be deleted after the UE being switched under a condition that the PDU session does not have a matched E-RAB; the CU-CP adds a matched PDU session for the E-RAB under a condition that the E-RAB does not have the matched PDU session.

In some embodiments, the CU-CP indicates the CU-UP to update the bearer configuration according to the second bearer configuration information comprises: the CU-CP sends a first bearer context modification request to the CU-UP, the CU-UP updates a bearer configuration according to second bearer configuration information comprised in the first bearer context modification request, and stops sending data to the UE. The second bearer configuration information comprises:
- PDU session information to be deleted
   ✔ PDU session ID
   ✔ Suspend operation instruction: an enumerated type, indicating that the PDU session is ready to be deleted, and data transmission is suspended
- PDU session information that needs to be modified
   ✔ PDU session ID
   ✔ Bearer type: an enumerated type, which indicates the field when it is required a transition from PDU session to E-RAB DRB
   ✔ E-RAB with a mapping relation to PDU session: the CU-CP assigns the E-RAB ID for the PDU session
- E-RAB that needs to be added
   ✔ E-RAB ID that needs to be added
   ✔ QoS information of the bearer.

In step 203, the CU-CP generates first access configuration information according to the update result of the bearer configuration of the CU-UP, and sends the first access configuration information to the second base station, such that the second base station generates second access configuration information used by the UE to access the second base station.

In some embodiments, after performing the corresponding bearer update operation, the CU-UP sends a first bearer context modification response to the CU-CP, wherein the first bearer context modification response includes:
- a successfully added bearer list: related E-RAB bearer ID
- a successfully deleted bearer list: related PDU session ID
- a successfully modified bearer list: related PDU session ID and E-UTRAN ID corresponding to the PDU
- a bearer list which cannot be successfully accepted: related E-RAB bearer ID

In some embodiments, the CU-CP sends the first access configuration information to the second base station comprises: the CU-CP encapsulates the first access configuration information in an RRC container and sends the first access configuration information to the second base station through an interface between the CU-CP and the second base station.

The first access configuration information includes at least one of a successfully added bearer list, a successfully deleted bearer list, and a bearer list which cannot be successfully accepted.

In step 204, the CU-CP generates fourth bearer configuration information for configuring the bearer of the CU-UP according to third bearer configuration information comprised in the handover request response sent by the second base station, and indicates the CU-UP to update the bearer configuration according to the fourth bearer configuration information.

In some embodiments, the CU-CP indicates the CU-UP to update the bearer configuration according to the fourth bearer configuration information comprises: the CU-CP sends a second bearer context modification request to the CU-UP, wherein the second bearer context modification request comprises the fourth bearer configuration information. The CU-UP configures the bearers to be added for uplink service and downlink service transmission, and deleting the identifiers of the bearers to be deleted and all cache data according to the fourth bearer configuration information.
In some embodiments, the CU-CP sends the access indication information to the CU-UP after receiving the access request sent by the user terminal. And after receiving the access indication information, the CU-UP processes uplink data and downlink data of the UE by using the configured bearers. The access indication information comprises the control plane user ID assigned by the CU-CP, a user plane user ID assigned by the CU-UP and an access completion indication.

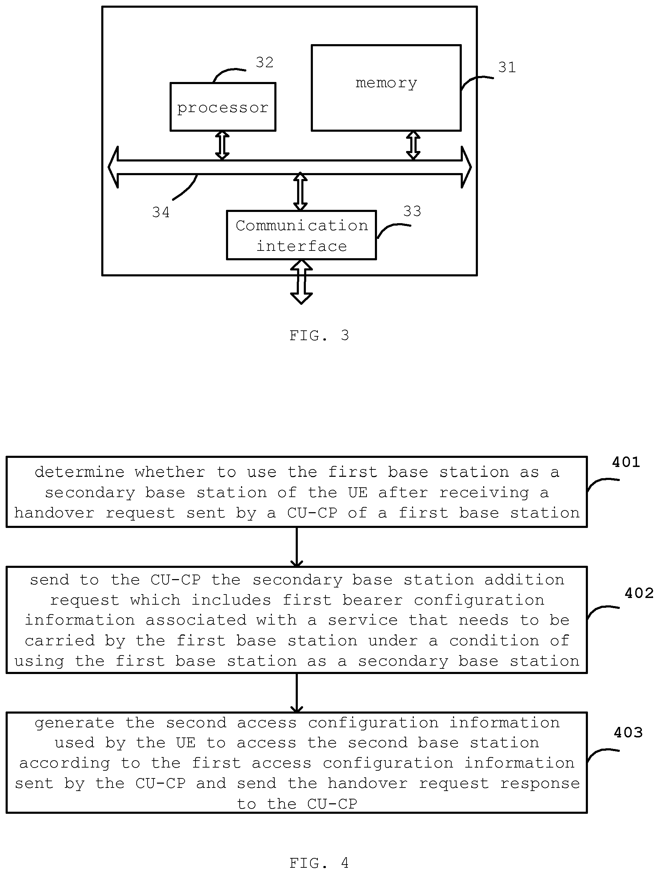

FIG. 3 is a schematic structural diagram of a base station according to one embodiment of the present disclosure. As shown in FIG. 3, the base station includes a memory 31 and a processor 32.

The memory 31 is used for storing instructions, the processor 32 is coupled to the memory 31 and configured to implement the method according to any one of the embodiments in FIG. 1 or FIG. 2 based on the instructions stored in the memory.

As shown in FIG. 3, the base station further includes a communication interface 33 for information interaction with other devices. Meanwhile, the device also comprises a bus 34, and the processor 32, the communication interface 33 and the memory 31 are communicated with each other through the bus 34.

The memory 31 may comprise high-speed RAM memory, and may also include non-volatile memory, such as at least one disk memory. The memory 31 may also be a memory array. The storage 31 may also be partitioned into blocks which may be combined into virtual volumes according to certain rules.

Further, the processor 32 may be a central processing unit CPU, or may be an application specific integrated circuit ASIC, or one or more integrated circuits configured to implement embodiments of the present disclosure.

The present disclosure also relates to a non-transitory computer-readable storage medium for storing instructions which, when executed by a processor, implement the method according to any one of the embodiments in FIG. 1 or FIG. 2.

Fig. 4 is a schematic flowchart of a connection mode configuration method according to still another embodiment of the disclosure. In some embodiments, the following connection mode configuration method is performed by the second base station.

In step 401, it is determined whether the first base station is used as a secondary base station of the UE after receiving a handover request sent by the CU-CP of a first base station.

In some embodiments, it is determined whether the first base station is used as a secondary base station of the UE comprises: it is determined not to use the first base station as the secondary base station of the UE under a condition that a UE capability of the UE does not support the addition of secondary connection in a handover process; it is determined to use the first base station as the secondary base station of the UE under a condition that the UE capability of the UE supports the addition of secondary connection in a handover process, and the cause of the handover is an EPS fallback and there exists no measurement result; it is determined to use the first base station as the secondary base station of the UE under a condition that the UE capability of the UE supports the addition of secondary connection in the handover process and a signal intensity of a cell to which the first base station belongs is the highest in the measurement result.

In step 402, a secondary base station adding request is sent to the CU-CP under a condition that the first base station is used as the secondary base station, wherein the secondary base station adding request comprises the first bearer configuration information associated with a service needing to be carried by the first base station.

In some embodiments, the first bearer configuration information includes a list of services borne by the first base station and an NGAP identifier assigned to the UE by the first core network, wherein the list of services borne by the first base station includes an identifier of each E-RAB and corresponding QoS configuration information.

In step 403, second access configuration information that the UE uses to access the second base station is generated according to the first access configuration information sent by the CU-CP, and a handover request response is sent to the CU-CP, wherein the handover request response comprises third bearer configuration information used for describing bearer configurations of the first base station and the second base station.

In some embodiments, after the second access configuration information is generated, the first access configuration information is placed in the first RRC container to instruct the UE to access the first base station during the handover process; and the second access configuration information is placed into a second RRC container to instruct the user terminal to access the second base station in the handover process.

In some embodiments, the third bearer configuration information comprises a list of bearers that can be accepted by the first base station, a list of bearers that can be accepted by the second base station, a list of bearers that cannot be accepted by the first base station, and a list of bearers that cannot be accepted by the second base station.

In some embodiments, sending the handover request response to the CU-CP comprises: the second base station sends the handover request response to the first base station through a second core network corresponding to the second base station and a first core network corresponding to the first base station.

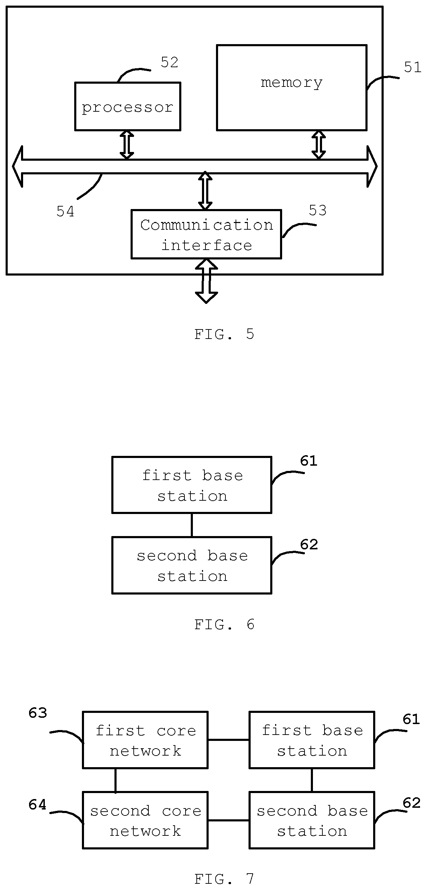

FIG. 5 is a schematic structural diagram of a base station according to an embodiment of the present disclosure. FIG. 5 includes a memory 51, a processor 52, a communication interface 53, and a bus 54. The processor 52 is configured to implement a method as described in any of the embodiments of FIG. 4, based on the instructions stored in the memory.

The present disclosure also relates to a non-transitory computer-readable storage medium storing instructions which, when executed by a processor, implement the method according to any one of the embodiments in FIG. 4.

FIG. 6 is a schematic structural diagram of a communication system according to one embodiment of the present disclosure. As shown in FIG. 6, the communication system includes a first base station 61 and a second base station 62. The first base station 61 is a base station according to any of the embodiments in FIG. 3, and the second base station 62 is a base station according to any of the embodiments in FIG. 5.

FIG. 7 is a schematic structural diagram of a communication system according to another embodiment of the present disclosure. FIG. 7 differs from FIG. 6 in that in the embodiment shown in fig. 7, the communication system further comprises a first core network 63 corresponding to the first base station 61, and a second core network 64 corresponding to the second base station 62.

In the process of sending the handover request to the second base station by the first base station, the first core network 63 maps the PDU session included in the handover request sent by the first base station 61 to E-RAB information, records the mapping relationship between the PDU session identifier and the E-RAB identifier, writes the E-RAB information into the handover request to update the handover request, and sends the updated handover request to the second core network 64. The second core network 64 sends the updated handover request to the second base station 62.

In the process of sending the handover request response from the second base station to the first base station, the second core network 64 sends the handover request response sent from the second base station 62 to the first core network 63. The first core network 63 converts the E-RAB identifier included in the third bearer configuration information in the handover request response into a PDU session identifier according to the mapping relationship between the PDU session identifier and the E-RAB identifier, to generate an updated handover request response. The first core network 63 sends the updated handover request response to the first base station 61.

In some embodiments, the functional unit modules described above can be implemented as a general purpose processor, a programmable logic controller (PLC), a digital signal processor (DSP), an application specific integrated circuit (ASIC), a field programmable gate array (FPGA) or other programmable logic device, discrete gate or transistor logic, discrete hardware components, or any suitable combination thereof for performing the functions described in this disclosure.

In the following parts, the present disclosure will be illustrated by the following specific embodiments:

### Embodiment One:

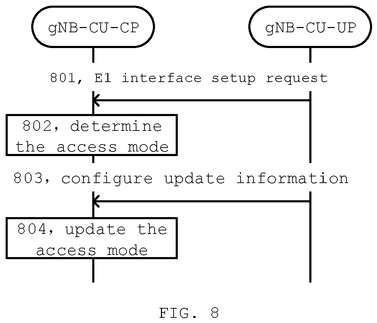

In this embodiment, the control plane and the user plane are separated in the first base station (NR base station) . In the process of configuring the E1 interface, two network numbers of PLMN1 and PLMN2 are supported, wherein the user plane entities of both network numbers only support connection to EPC, as the user plane entity software upgrade supports simultaneous connectivity to 5GC, and the network administrator only configures PLMN1 to support 5G core network 5GC. The update process is triggered by the user plane entity. As shown in FIG. 8:

In step 801, the gNB-CU-CP determines the first core network connection capability supported by each PLMN according to the network management configuration and sends the first core network connection capability information to the gNB-CU-UP through an E1 interface setup request (GNB-CU-UP E1 SETUP REQUEST). The first core network connection capability information includes:
- public core network supporting capability: EPC
- a list of PLMNs supported by the user plane entity:
   ✔ PLMN1
   ✔ PLMN2

In step 802, the gNB-CU-UP stores the first core network connection capability information supported by the user plane entity, and determines that all users can only adopt the access scheme of NSA according to the public core network support capability.

In step 803, the core network connectivity capability of PLMN1 in the gNB-CU-CP becomes to support 5GC and EPC, and the gNB-CU-CP sends the updated first core network connection capability to the gNB-CU-UP through a configuration update message (gNB-CU-UP CONFIGURATION UPDATE). The configuration information is:
- public core network support capability: EPC
- a list of PLMNs supported by the user plane entity:
   ✔ PLMN1
      - Each PLMN core network support capability: both
   ✔ PLMN2

In step 804, after receiving the configuration update message, the gNB-CU-CP updates the stored first core network connection capability and determines a network access mode for the user based on the new first core network connection capability.

### Embodiment Two:

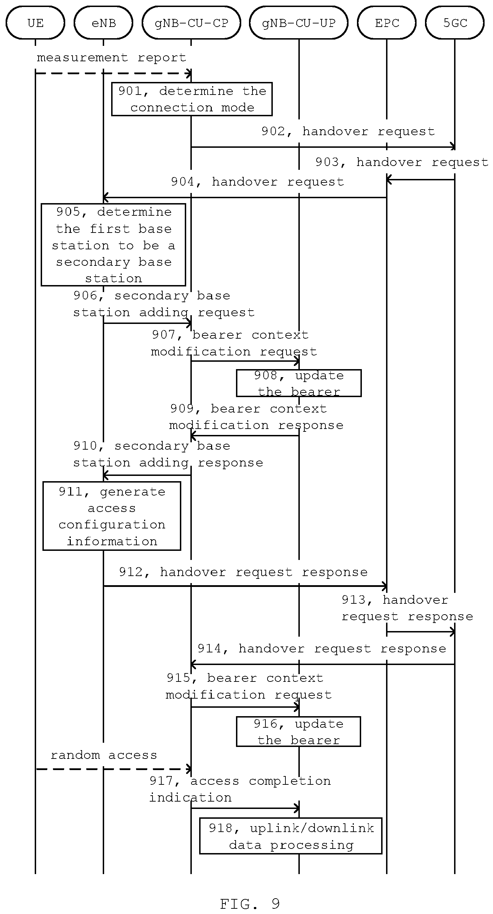

This embodiment describes a handover process from SA to NSA involving a voice interoperability process triggered by EPS Fallback without any measurement report information therein. Only one default bearer service and one FTP (File Transfer Protocol) download service are maintained on the NR side before the handover. The user plane entity supports two network numbers of PLMN1 and PLMN2, wherein the user plane entities of the two network numbers only support connection to EPC, as the user plane entity software upgrade supports simultaneous connectivity to 5GC, and the network management only configures PLMN1 to support 5GC. As shown in FIG. 9:

in step 901, the gNB-CU-CP determines a connection mode adopted by the UE after switching to the second base station eNB according to the UE capability of the UE and the connection mode supported by the user plane. Currently the UE supports NSA/SA mode and direct handover from SA to NSA , and the UE selects PLMN 1. According to the indication information of the user plane, the gNB-CU-CP determines that the UE can support the NSA/SA mode.

In step 902, since the UE triggers the handover based on EPS Fallback, and the gNB-CU-CP has not received a measurement report sent by the UE, the gNB-CU-CP determines that the measurement result only carries a handover cause value. The gNB-CU-CP sends a handover request to the AMF (Access and Mobility Management Function) to which the gNB is connected. The handover request includes the measurement result and handover assistance information.

The measurement result includes the following information:
- cause value for handover: EPS Fallback

The handover assistance information includes the following:
- UE NGAP identifier

In step 903, the AMF determines the access mode to which the eNB belongs and a corresponding MME (Mobility Management Entity) according to the target base station address information carried in the handover request message, maps the PDU session information carried in the handover request message into the E-RAB information, places the E-RAB information into the handover request message, records the mapping relationship between the PDU session identifier and the E-RAB identifier of the UE, and forwards the handover request message to the MME.

In step 904, after receiving the handover request message forwarded by the AMF, the MME determines a receiver of the handover message according to the target address information carried in the handover message, and sends the message to the eNB.

In step 905, after receiving the handover request of the gNB-CU-CP, the eNB determines to add the gNB as the secondary connection of the UE according to the fact that the cause of the handover is a EPS Fallback and there is no measurement result.

In step 906, the eNB determines which services need to be carried by the gNB according to the pre-configuration information, and sends a secondary base station addition request (SgNB Addition Request) message containing the first bearer configuration information to the gNB-CU-CP through the X2 interface. The first bearer configuration information includes the following configuration information:
- a list of services borne by the gNB
   ✔ E-RAB identifier for each bearer
   ✔ QOS configuration information for each bearer
- UE NGAP identifier

In step 907, the gNB-CU-CP determines from the UE NGAP identifier whether the UE has configured context in the gNB and is performing a handover operation. If the context has been configured and a handover operation is being performed, the gNB-CU-CP retains the context information of the UE, and PDU session 1 and PDU session 2 adopt the same QOS value and are mapped to E-RAB 1 at the same time. The gNB-CU-CP sends a bearer context modification request message including the second bearer configuration information to the gNB-CU-UP. The second bearer configuration includes the following information:
- PDU session that needs to be modified:
   ✔ identifier including the PDU session
   ✔ bearer type: enumerated type, E-RAB, indicating the field when a transition from PDU session to E-RAB DRB is required
   ✔ E-RAB session to which PDU session is mapped: the control plane assigns the E-RAB ID to the PDU session

In step 908, the gNB-CU-UP completes the update and addition of the PDU bearer and stops sending any data to the UE.

In step 909, the gNB-CU-UP indicates the gNB-CU-CP about bearer configuration status information via a bearer context modification response message, which comprises the following information:
- a list of bearers modified successfully
   ✔ PDU session identifier
   ✔ E-UTRAN identifier corresponding to the PDU

In step 910, the gNB-CU-CP generates a first bearer configuration complete message, encapsulates the access configuration information in an RRC container, and sends a secondary connection update response message to the eNB through the X2 interface to notify the eNB of the bearer update result and the user parameter configuration information. The first bearer configuration completion information includes:
- a list of E-RABs added successfully: E-RAB DRB1

In step 911, the eNB generates the access configuration information for the UE according to the secondary connection update response message sent by the gNB-CU-CP, and places the received access configuration information generated by the gNB for the user into two independent RRC containers for instructing the UE to access to the gNB and the eNB respectively during the handover process.

In step 912, the eNB generates the third bearer configuration information according to the secondary connection update response message sent by the gNB-CU-CP, and simultaneously places the access configuration information generated by the gNB and the eNB respectively in the handover response message to send to the MME. The third bearer configuration information includes, but is not limited to, the following information:
- bearer information that can be accepted:
   ✔ a list of bearers that eNB can accept: E-RAB ID for each bearer
   ✔ a list of bearers that the gNB can accept: "list of E-RABs added successfully" in the first bearer configuration complete message

In step 913, the MME determines that the receiver of the handover response message is the AMF according to the target base station ID information carried in the handover response message, and forwards the handover response message to the AMF.

In step 914, based on the bearer information included in the third bearer configuration information in the handover response, and the mapping relationship between the stored E-RAB and PDU session ID, the AMF converts the E-RAB identifier in the third bearer configuration into a PDU session identifier, and sends the handover response message to the gNB-CU-CP according to the target base station ID carried in the handover response message.

In step 915, after receiving the handover request response message, the gNB-CU-CP generates the fourth bear configuration information and sends the fourth bearer configuration information to the gNB-CU-UP via a bearer context modification request message. The fourth bearer configuration information includes, but is not limited to, the following:
- a list of bearers to be added
   ✔ PDU Session 1
   ✔ PDU Session 2

In step 916, after receiving the bearer context modification request message, the gNB-CU-UP configures the uplink and downlink transport services for the bearers to be added in the fourth bearer configuration information. For the bearers to be deleted, the gNB-CU-UP deletes the IDs of the bearers and all buffered data.

In step 917, after receiving the random access request from the user terminal, the gNB-CU-CP sends an indication message indicating access completion to the gNB-CU-UP via the E1 interface. The access indication information includes, but is not limited to, the following:
- control plane user ID: user ID assigned by the control plane
- user plane user ID: user ID assigned by the user plane
- an access complete indication: completed

In step 918, the gNB-CU-UP starts to transmit and receive uplink and downlink data of the UE after receiving the access completion indication information message.

By implementing the solution of the present disclosure, the following advantageous effects can be obtained:
1) The present disclosure can support automatic notification of the connection mode configuration conditions of different PLMNs to the control plane when a network connection mode change occurs so as to avoid the problem that in a CP/UP separated architecture, when configuring a connection mode to the user, the control plane may configure a wrong network connection mode to users of different PLMNs which may worsen the user's experience.
2) Under a condition of switching from SA to NSA, the present disclosure can avoid the problems of time delay and interruption caused by the fact that the bearer is first deleted and then established in the prior schemes by introducing the suspension indication information, which reduces the time delay of a user plane and improve the perception of the user.
3) The present disclosure makes small alteration to the UE and has good backward compatibility and deployment feasibility. The present disclosure makes improvement based on the existing protocol, without introducing a new protocol process and is easy to implement.

So far, embodiments of the present disclosure have been described in detail. Some details well known in the art have not been described in order to avoid obscuring the concepts of the present disclosure. Those skilled in the art can now fully appreciate how to implement the technical solution disclosed herein, in view of the foregoing description.

Although some specific embodiments of the present disclosure have been described in detail by way of example, it should be understood by those skilled in the art that the above examples are for illustration only and are not intended to limit the scope of the present disclosure. It will be understood by those skilled in the art that various changes may be made and equivalents may be substituted for elements thereof without departing from the scope and spirit of the present disclosure. The scope of the present disclosure is defined by the appended claims.

## Claims

1. A configuration method for a connection mode by a first base station, comprising:
determining, by a control plane entity in the centralized unit CU-CP of the first base station, a connection mode adopted by a user equipment UE after being switched to a second base station according to a UE capability of the UE and a connection mode supported by a user plane entity in the centralized unit CU-UP of the first base station after receiving measurement information reported by the UE, and sending a handover request to the second base station;
configuring, by the CU-CP, a bearer of the CU-UP according to first bearer configuration information comprised in a secondary base station adding request sent by the second base station, generating second bearer configuration information according to a configuration result and indicating the CU-UP to update the bearer configuration according to the second bearer configuration information;
generating, by the CU-CP, first access configuration information according to an updating result of the bearer configuration of the CU-UP and sending the first access configuration information to the second base station;
generating, by the CU-CP, fourth bearer configuration information for configuring the bearer of the CU-UP according to third bearer configuration information comprised in the handover request response sent by the second base station, and indicating the CU-UP to update the bearer configuration according to the fourth bearer configuration information.

2. The configuration method according to claim 1, wherein the determining, by the CU-CP, a connection mode adopted by the UE after being switched to a second base station comprises:
determining, by the CU-CP, that the UE establishes a single connection with the second base station after being switched under a condition that the UE supports only single connectivity;
determining, by the CU-CP, that the UE establishes a single connection with the second base station after being switched under a condition that the UE supports a dual connectivity and the core network connection capability of the CU-UP corresponding to the public land mobile network selected by the UE supports a 5G core network;
determining, by the CU-CP, that the UE establishes a single connection with the second base station or a double connection with the first base station and the second base station after being switched according to a signal intensity under a condition that the UE supports the double connectivity and the core network connection capability of the CU-UP corresponding to the public land mobile network selected by the UE supports an evolved packet core network and a 5G core network.

3. The configuration method according to claim 1, wherein
the handover request includes address information of the second base station and handover assistance information, wherein the handover assistance information comprises a next generation application protocol identifier allocated to the UE by a first core network corresponding to the first base station.

4. The configuration method according to claim 3, wherein
the handover request further comprises a measurement result associated with a radio access technology used by the second base station under a condition that the UE can only establish establishes a single connection with the second base station after being switched;
the handover request further comprises a measurement result associated with a radio access technology used by the first base station and a measurement result associated with the radio access technology used by the second base station under a condition that the UE establishes a dual connection with the first base station and the second base station after being switched;
the handover request comprises no measurement result under a condition that a cause of the handover is an evolved packet system fallback.

5. The configuration method according to claim 4, wherein
the measurement result comprises an identifier of the measurement cell, and at least one of a signal intensity and a signal quality associated with the identifier of the measurement cell, the signal intensity comprises at least one of a reference signal received power of a long term evolution cell or a reference signal received power of a synchronization signal of a new radio cell, the signal quality comprises at least one of a reference signal reception quality of the long term evolution cell or a reference signal reception quality of the synchronization signal of the new radio cell.

6. The configuration method according to claim 1, wherein the sending a handover request to the second base station comprises:
sending, by the CU-CP, the handover request to the second base station through a first core network corresponding to the first base station and a second core network corresponding to the second base station.

7. The configuration method according to claim 1, wherein the configuring, by the CU-CP, a bearer of the CU-UP according to first bearer configuration information comprises:
determining, by the CU-CP, whether an evolved radio access bearer matched with a protocol data unit session is comprised in bearers of the first base station under a condition of determining the UE configures a context in the first base station and is executing a handover operation according to the identifier of the next generation application protocol, wherein a service quality information of the protocol data unit session is the same as a service quality information of the matched evolved radio access bearer;
determining, by the CU-CP, that a protocol data unit session needs to be kept in the CU-UP after the UE being switched and establishing a mapping relation between the CU-CP and the matched evolved radio access bearer under a condition that there exists a evolved radio access bearer matched with the protocol data unit session;
determining, by the CU-CP, that the protocol data unit session needs to be deleted after the UE being switched under a condition that the protocol data unit session does not have a matched evolved radio access bearer;
adding, by the CU-CP, a matched protocol data unit session for the evolved radio access bearer under a condition that the evolved radio access bearer does not have the matched protocol data unit session.

8. The configuration method according to claim 7, wherein the indicating, by the CU-CP, the CU-UP to update the bearer configuration according to the second bearer configuration information comprises:
sending, by the CU-CP, a first bearer context modification request to the CU-UP;
updating, by the CU-UP, a bearer configuration according to second bearer configuration information comprised in the first bearer context modification request, and stopping sending data to the UE,
wherein the second bearer configuration information comprises protocol data unit session information that needs to be deleted, protocol data unit session information that needs to be modified, and an evolved radio access bearer that needs to be added, wherein the protocol data unit session information that needs to be deleted comprises a protocol data unit session identifier and a suspension operation indication, the protocol data unit session information that needs to be modified comprises a protocol data unit session identifier, an evolved radio access bearer that has a mapping relationship with the protocol data unit session and a corresponding bearer type, and the evolved radio access bearer information that needs to be added comprises an evolved radio access bearer identifier that needs to be added and corresponding quality of service information.

9. The configuration method according to claim 8, further comprising:
sending, by the CU-UP, a first bearer context modification response after updating corresponding bearer, wherein the first bearer context modification response comprises at least one of a successfully added bearer list, a successfully deleted bearer list, a successfully modified bearer list and a bearer list which cannot be successfully accepted.

10. The configuration method according to claim 9, wherein the sending, by the CU-CP, the first access configuration information to the second base station comprises:
encapsulating, by the CU-CP, the first access configuration information in a radio resource control container and sending the first access configuration information to the second base station through an interface between the CU-CP and the second base station;
wherein the first access configuration information comprises at least one of a successfully added bearer list, a successfully deleted bearer list, and a bearer list which cannot be successfully accepted.

11. The configuration method according to claim 1, wherein the indicating the CU-UP to update the bearer configuration according to the fourth bearer configuration information comprises:
sending, by the CU-CP, a second bearer context modification request to the CU-UP, wherein the second bearer context modification request comprises the fourth bearer configuration information;
configuring, by the CU-UP, the bearers to be added for uplink service and downlink service transmission, and deleting the identifiers of the bearers to be deleted and all cache data according to the fourth bearer configuration information.

12. The configuration method according to claim 1, further comprising:
sending, by the CU-CP, access indication information to the CU-UP after receiving an access request sent by the UE;
processing, by the CU-UP, uplink data and downlink data of the UE using the configured bearer after receiving the access indication information,
wherein the access indication information comprises a control plane user identifier assigned by the CU-CP, a user plane user identifier assigned by the CU-UP and an access completion indication.

13. The configuration method according to any one of claims 1-12, further comprising:
determining, by the CU-UP, a connection capability of the core network of the CU-UP according to a trigger information and sending connection capability information of the core network of the CU-UP to the CU-CP;
determining, by the CU-CP, a connection mode of the UE according to the core network connection capacity information of the CU-UP.

14. The configuration method according to claim 13, wherein
the connection capability information of the core network comprises a public core network support capability of the CU-UP, and a public land mobile network list supported by the CU-UP, wherein the public land mobile network list comprises public land mobile network identifies and the core network support capability of each public land mobile network.

15. The configuration method according to claim 13, further comprising:
sending, by the CU-UP, a updated core network connection capacity information to the CU-CP under a condition that the core network connection capacity of one or more public land mobile networks is changed, thereby the CU-CP determining the connection mode of the UE according to the updated core network connection capacity information.

16. The configuration method according to claim 14, wherein:
the UE selecting the CU-UP can only be configured with a non-stand-alone mode under a condition that the CU-UP supports an evolved packet core network;
the UE selecting the CU-UP can only be configured with a stand-alone mode under a condition that the CU-UP supports a 5G core network;
the UE selecting the CU-UP is configured with at least one of the non-stand-alone mode and the stand-alone mode according to needs under a condition that the CU-UP supports an evolved packet core network and a 5G core network.

17. A base station, comprising:
a processor; and
a memory coupled to the processor, storing program instructions which, when executed by the processor, cause the processor to implement the method of any one of claims 1-16.

18. A configuration method for a connection mode by a second base station, comprising:
determining whether the first base station is used as a secondary base station of a user equipment UE after receiving a handover request sent by a control plane entity in a centralized unit CU-CP of a first base station;
sending a secondary base station adding request to the CU-CP under a condition that the first base station is used as the secondary base station, wherein the secondary base station adding request comprises first bearer configuration information associated with a service needing to be carried by the first base station;
generating second access configuration information that the UE uses to access the second base station according to the first access configuration information sent by the CU-CP, and sending a handover request response to the CU-CP, wherein the handover request response comprises third bearer configuration information used for describing bearer configurations of the first base station and the second base station.

19. The configuring method according to claim 18, wherein the determining whether the first base station is used as a secondary base station of the UE comprises:
determining not to use the first base station as the secondary base station of the UE under a condition that a UE capability of the UE does not support the addition of secondary connection in a handover process;
determining to use the first base station as the secondary base station of the UE under a condition that the UE capability of the UE supports the addition of secondary connection in a handover process, and the cause of the handover is an evolved packet system fallback and there exists no measurement result;
determining to use the first base station as the secondary base station of the UE under a condition that the UE capability of the UE supports the addition of secondary connection in the handover process and a signal intensity of a cell to which the first base station belongs is the highest in the measurement result.

20. The configuring method according to claim 18, wherein
the first bearer configuration information comprises a list of services carried by the first base station and a next generation application protocol identifier allocated by the first core network to the UE, wherein the list of services carried by the first base station comprises an identifier of each evolved radio access bearer and corresponding quality-of-service configuration information.

21. The configuring method according to claim 20, further comprising:
placing the first access configuration information into a first radio resource control container, thereby instructing the UE to access the first base station in the handover process after generating the second access configuration information;
placing the second access configuration information into a second radio resource control container, thereby instructing the UE to access the second base station in the handover process.

22. The configuration method according to claim 21, wherein
the third bearer configuration information comprises a list of bearers accepted by the first base station, a list of bearers accepted by the second base station, a list of bearers that cannot be accepted by the first base station, and a list of bearers that cannot be accepted by the second base station.

23. The configuration method according to claim 18, wherein the sending a handover request response to the CU-CP comprises:
sending the handover request response to the first base station through a second core network corresponding to the second base station and a first core network corresponding to the first base station.

24. A base station, comprising:
a processor; and
a memory coupled to the processor, storing program instructions which, when executed by the processor, cause the processor to implement the method of any one of claims 18-23.

25. A communication system, comprising:
a first base station which is the base station as claimed in claim 17;
a second base station which is the base station according to claim 24.

26. The communication system according to claim 25, further comprising a first core network corresponding to the first base station and a second core network corresponding to the second base station;
the first core network, configured to map the protocol data unit session comprised in the handover request sent by the first base station into evolved radio access bearer information, record the mapping relation between the protocol data unit session identifier and the evolved radio access bearer identifier, write the evolved radio access bearer information into the handover request to update the handover request, and send the updated handover request to a second core network;
the second core network, configured to send the updated switching request to the second base station.

27. The communication system according to claim 26, wherein:
the second core network is configured to send a handover request response sent by the second base station to the first core network;
the first core network is configured to convert the evolved radio access bearer identifier comprised in the third bearer configuration information in the handover request response into a protocol data unit session identifier according to a mapping relation between the protocol data unit session identifier and the evolved radio access bearer identifier to generate an updated handover request response, and send the updated switching request response to the first base station.

28. A non-transitory computer readable storage medium for storing computer instructions which, when executed by a processor, implement the method according to any one of claims 1-16, 18-23.
